# EUROPEAN PATENT SPECIFICATION

(11) **EP 1 512 319 B1**
(45) Date of publication and mention of the grant of the patent: **02.05.2007**
(21) Application number: 04255396.6
(22) Date of filing: 06.09.2004
(51) Int. Cl.: A01D 34/695, A01D 43/077

(54) **Grass mower**
Rasenmäher
Tondeuse à gazon

(30) Priority: 06.09.2003 GB 0320924; 06.09.2003 GB 0320923
(43) Date of publication of application: 09.03.2005
(73) Proprietor: GMCA PTY Ltd, Victoria 3045 (AU)
(72) Inventor: Park, Keith, Ellerton York YO42 4NX (GB)
(74) Representative: Wood, Graham

(56) References cited:
- EP-A- 0 457 433
- EP-A- 0 614 603
- EP-A- 0 634 090
- EP-A- 1 230 836
- DE-A1- 4 036 599
- GB-A- 1 507 432
- GB-A- 2 062 433
- GB-A- 2 267 809
- US-A- 4 510 738
- US-A- 4 964 266
- US-A- 5 261 215
- US-A- 5 483 788
- US-A- 5 775 074
- US-A- 6 089 006
- US-B1- 6 494 427
- US-B1- 6 513 311

## Description

The invention to which this application relates is a new and improved form of grass mower and, in particular, an improvement to the form of grass mower known as a hover mower.

Hover mowers typically comprise a central, vertically mounted and driven shaft within a housing and on the said shaft, are provided a series of blades which rotate around the axis defined by the said shaft. The blades are positioned within the housing and the housing is provided to be placed close to the surface on which the grass is growing and which grass is to be cut. The shaft also supports an impeller which allows the flow of air outwardly and generates the "hovering" effect.

In one embodiment, sufficient air flow is generated to cause the mower to "hover" which means that wheels, rollers or the like are not required to allow the mower to be moved across the grass. Users of hover mowers have been found to find it desirable that the housing includes a grass cuttings collection box. The collection box is removable when filled, to allow the grass cuttings to be carried and dumped at a suitable location. One form of known hover mower is disclosed in, for example, in EP-0614603 which shows one form of hover mower whereby there is generated an air flow such that the air and grass cuttings are collected from the grass surface at a location behind the cutter, the air carrying the grass cuttings into the collection box whereupon the grass cuttings are maintained in the collection box with air passing through a series of air passages to return to the location of the vertical shaft and cutting blades. A further example of a known hover mower is disclosed in EP634090 in which air passes from the grass collection box to one of a fore or aft hood which open directly towards ground datum. The ait pressure issuing from the hoods help to maintain the mower above ground datum.

However, with these conventional systems, problems are experienced in the use of the same inasmuch that the collected grass cuttings in the cuttings collector restrict the air flow to the air impeller, and as the grass cuttings in the collector increases, so the airflow progressively deteriorates. This in itself is a problem but is further exacerbated by the fact that the increase in grass cuttings also increases the weight of the mower which makes the "hovering" of the mower more difficult so that in reality it would be desirable to have an increase in air flow as the grass cuttings increase to improve the hover rather than the reduction which is what conventionally occurs.. This, in turn, reduces the hover effect which can be created on the housing of the mower and hence reduces the efficiency and performance of the mower. As a result, the provision of cutting collection boxes on hover mowers is largely regarded as being a relatively inefficient and problematic feature.

A further problem with conventional hover mowers is that the air flow through the housing is not always particularly well controlled due to either blockage of the air flow from grass cuttings or other debris, or the incorrect or uncontrolled flow of air through the housing. When the air flow is not correctly controlled, the hovering effect of the mower is not efficient and can lead to the mower having to be effectively dragged across the grass rather than hovering above the same. This can lead to the mower not being usable at all or make the user of the mower tired more quickly.

There are also a range of features which have not, to the applicant's knowledge, been incorporated into a hover mower arrangement and the lack of these features or a combination of the features, is believed by the applicant to have limited the potential market and sales of mowers.

The aim of the present invention is to provide an improved grass collection system for a mower with an improved air flow through the mower housing to improve the movement of a hover mower.

In a first aspect of the invention there is provided a grass mower, said grass mower incorporating a housing, said housing connected to a handle assembly which allows the mower to be moved across the grass to be cut by a user, said housing incorporating a motor for driving a shaft and on which shaft, a series of cutting blades are attached, and an impeller, said cutting blades rotated to cut the grass and, an air flow passage or passages are defined within the housing to allow the flow of air to the vicinity of the impeller and grass cutting blades, to encourage the mower to hover, said mower also incorporating a detachable grass cuttings collection box through which the air passes prior to entering the housing carrying grass cuttings with the same into the collection box, said collection box having an opening which leads to at least two channels defined in the housing through which air passes upon leaving the grass cuttings collection box, characterised in that the at least two spaced channels are provided, one on each opposing side of the collection box, and through both of which air passes when it leaves the grass collection box.

Typically the opening of the collection box is positioned above the inlet into the box when the box is in position on the mower. Preferably the opening is at the top of the collections box.

In one embodiment, each of the channels is provided at or adjacent a longitudinal edge of the housing and is shaped to encourage the air passing therethrough to flow downwardly towards the vertical shaft of the cutter blades. In one embodiment, in addition to directing the flow of air inwardly towards the vertical shaft, the channels direct the air into an air flow passage which includes at least one baffle therein, said baffle acting to direct the air in a low turbulence manner to the impeller. In one embodiment a lower and upper baffle are provided to form the air passage of the desired shape to allow the low turbulence air flow to the impeller.

In one embodiment the first and second baffles form the air passage intermediate the channels from the grass collection box and the impeller.

By encouraging the air to flow in a relatively smooth manner to the impeller, so the efficiency of operation of the grass mower and the hover facility, is improved.

Typically the channels through which the air passes, are each of the same dimension so as to accommodate equal air flow in each channel.

Preferably, the channels are located and shaped with respect to the cutter blades such that at least the entry into each channel, is offset from the location of the blades and therefore the blades cannot be reached, or easily reached, from the channel entry. Typically however, the entries into the channels will be provided with guards to prevent the insertion of articles or a part of a person's anatomy into the same.

Typically, the grass cuttings collection box is shaped so as to allow the maximum available space for reception of the grass cuttings to be provided. For example, part of the grass cuttings collection box can be shaped so as to sit between the location of the air flow channels.

In one embodiment the collection box includes an inlet aperture through which the grass cuttings enter the collection box. Preferably an inlet "chute" is provided separately to, but leading into, the inlet aperture. The inlet chute is shaped and positioned to maximise the passage of the grass and air flow.

Typically a lid is provided to close the opening of the grass cuttings collection box. Preferably, the lid is provided fixed to the housing and the internal face of the lid is provided with a mesh or other filtering means so as to prevent grass cuttings passing through the same but to allow the air to exit the grass cuttings collection box and pass to the channels in the housing. The provision of this arrangement effectively provides a dual filtering for the air flow in that firstly, the air is filtered as it passes through the filter means from the grass collection box then enters the void between the filter and the internal surface of the top of the lid and then again passes through a filtering medium or guard as it passes into the air flow channels. This dual filtration means that there is a reduced risk of grass cuttings entering the air channels and blocking the same.

Preferably, the lid is hinged to the housing with the location of the hinge being provided towards the front of said housing allowing the lid to pivot open towards the front of the housing. This arrangement has several advantages in that it allows the lid to be hinged to the housing at the location of the cowling for the motor which drives the cutter blades and therefore is of increased strength with respect to the other components, it does not require additional material and assembly to be provided at the rear of the housing and furthermore, it means that when the lid is in an open position, it does not interfere with the location of the handle which depends from the rear of the housing in a diagonal manner.

It is preferred that the grass cuttings collection box includes an indication means which allows the user to be aware of when the collection box is full. This indication means can either be in the form of an electrical indication via, perhaps the switch box provided on the handle of the mower. Alternatively, mechanical indication means can be provided whereby a change in condition of the indicator takes place when the grass cuttings in the collection box reach a particular level or alternatively, a portion, but preferably all of the material from which the grass collection box is manufactured, is relatively clear so as to allow the user to make a visual inspection of the level of the grass cuttings within the collection box at regular intervals.

It is further preferred that the housing incorporates at least one roller, the roller providing the ability to provide stripes on the lawn once the grass is cut.

In one embodiment, a roller is provided at the front of the housing and said roller is provided to protrude below the lower lip of the housing to allow bumps and indents, in the surface to be taken into account and accommodated without snagging the lower lip of the housing.

The position of the mounting of the cutting blades can be selectively spaced with respect to the housing by the provision of a series of spacer elements, said spacer elements selectively positionable on the drive shaft for the cutter blades and on the portion of the drive shaft which lies between the interior surface of the housing and the cutter blades. Typically the spacers are mutually interlocking when positioned on the shaft and stackable with respect to each other thereby allowing the cutter blade height to be adjusted and maintained and hence the height of cut of the grass which is achieved to be adjusted.

A transport wheel can be provided to allow the mower to be moved between the storage and cutting locations or two different cutting locations. In one embodiment, the transport wheel is provided at the rear of the housing of the mower and can either be positioned such that in normal use of the mower the transport wheel does not contact the surface such that tilting of the mower housing is required before the transport wheel can be used, or alternatively, the transport wheel is movable between a retracted storage position and an in-use position.

Control means for the mower, in the form of an electric switch box, can be provided on the handle assembly, said switch box including a first component which is required to be actuated against a biasing means by the user and at least one further component which is also required to be actuated by the user, and only when the first and second components are both actuated, can electricity be supplied to the drive means for the mower.

In a preferred embodiment the switchbox includes an indicator to indicate when the power supply to the switch box is on. In one embodiment, the indication is a light source which is lit when the power supply is on, and therefore acts as a safety mechanism for the user so that they can always be aware of when the lawn mower is live and hence when there is potential danger through operation of the switch and hence movement of the cutter blades.

In one embodiment, the actuation means when moved to the correct positions allow the supply of electrical power which is connected to the switch box, onwardly to drive the motor and hence rotate the cutting blades. In a preferred embodiment, the first component is required to be depressed or pushed towards the handle assembly and act upon a lever with an electrical contact thereon, said movement of the first component on the lever allowing the same to be actuated by the at least one second component to make electrical contact with an electrical contact incorporated within the switch box. When electrical contact is made with this contact then power can be supplied to the drive.

In one embodiment, the at least one second component can be actuated prior to or after actuation of the first component but it is only when the first component is actuated and the second component is actuated that electrical contact is made.

In one embodiment the handle assembly includes two assemblies, a first part depending from the mower body and a second part provided for sliding engagement with the first part via engaging means which include a collet assembly whereby tightening of the collet secures the end of the first or second part with the other part and, causes a gripping action on the other of said parts to provide engagement. This ensures that the handle assembly is adjustable in terms of length and also that the same, if manufactured for example, from aluminium, can be engaged in a manner which does not affect the strength of the material. This overcomes the need to provide apertures in the assembly which would weaken the strength of aluminium if used to form the handle assembly.

In one embodiment the first and second parts when engaged can be rotated between storage positions and in line use positions by rotation about the engagement means.

In one embodiment the handle assembly includes a tool tidy and cable coiling formation which allows tools provided with the mower to be stored with the mower during use, and also allows the electricity power cable to be coiled if the mower is electrically powered and stored on the handle in a coiled condition and retained in that position during storage.

In one embodiment when the mower is electrically powered control means for the electricity supply to power the mower are provided in the form of an electric switch box provided on the handle assembly.

In one embodiment the switch box includes a first component which is required to be actuated against a biasing means by the user and at least one further component which is also required to be actuated by the user, and only when the first and second components are both actuated, can electricity be supplied from the electricity cable to the drive means in the housing for the blade shaft.

Preferably the switchbox includes an indicator to indicate when the power supply from the electricity supply cable to the switch box is live. In one embodiment when the power is supplied to the drive means via the manipulation of the switchbox the indicator changes condition or an additional indicator means is activated.

Typically the actuation means, when moved to the positions for electrical contact, allow the supply of electrical power which is connected to the switch box, onwardly to drive the motor and hence rotate the cutting blades. In this embodiment, the first component is required to be depressed or pushed towards the handle assembly and act upon a lever with an electrical contact thereon, said movement of the first component on the lever allowing the same to be actuated by movement of the at least one second component to make electrical contact with an electrical contact incorporated within the switch box. Preferably the at least one second component can be actuated prior to or after actuation of the first component but it is only when the first component is actuated and the second component is actuated that electrical contact is made.

The control means control the electric power from an electricity power supply cable to drive means for the grass mower. The control means are positioned intermediate the power supply and the drive means on the mower for user manipulation. The control means includes a switchbox with actuating means including a first component which is required to be actuated against a biasing means by the user and at least one further component which is also required to be actuated by the user. The first and second components can be actuated in any order but only when the first and second components are both actuated, can electricity be supplied from the electricity cable to the drive means.

Typically the control means are mounted on the handle of the mower.

In one embodiment the switchbox includes an indicator to indicate when the power supply from the electricity supply cable to the switch box is live and in one embodiment when the power is supplied to the drive means the indicator changes condition or an additional indicator means is activated.

Typically the actuation means, when moved to the positions for electrical contact, allow the supply of electrical power which is connected to the switch box, onwardly to the drive means and hence rotate the cutting blades of the mower.

Preferably the first component is required to be depressed or pushed towards the switch box and acts upon a lever or member with an electrical contact thereon, said movement of the first component on the lever or member allowing the same to be actuated by movement of the at least one second component to make electrical contact with an electrical contact incorporated within the switch box. Alternatively the actuation of the second component allows the lever or member to be manipulated to a position whereby actuation of the first component allows electrical contact to be made.

Typically the at least one second component can be actuated prior to or after actuation of the first component but it is only when the first component is actuated and the second component is actuated that electrical contact can be made.

In a preferred embodiment, the handle assembly includes a tool tidy and cable coiling formation which allows tools conventionally provided with the mower to be stored with the mower during use, and also allows the cable to be coiled and stored on the handle in a coiled condition and retained in that position during storage.

Specific embodiments of the invention are now described with reference to the accompanying drawings, wherein:-
Figures 1a and b illustrate perspective views of the mower in accordance with one embodiment of the invention;
Figures 2a and b illustrate the mower of Figures 1a and b with lid open and handles extended;
Figure 3 illustrates an exploded diagram of the moulding components of the mower housing;
Figure 4 illustrates the mower as shown in Figures 2a and b with the grass collection box removed;
Figures 5a and b illustrate the grass collection box and supply chute thereto in more detail;
Figure 6 illustrate the underside of the mower in accordance with the invention;
Figure 7 illustrates the construction of the engagement means for the handle assembly to join the first and second handle parts together;
Figures 8a and b illustrate top and bottom views of the switch box assembly of the handle;

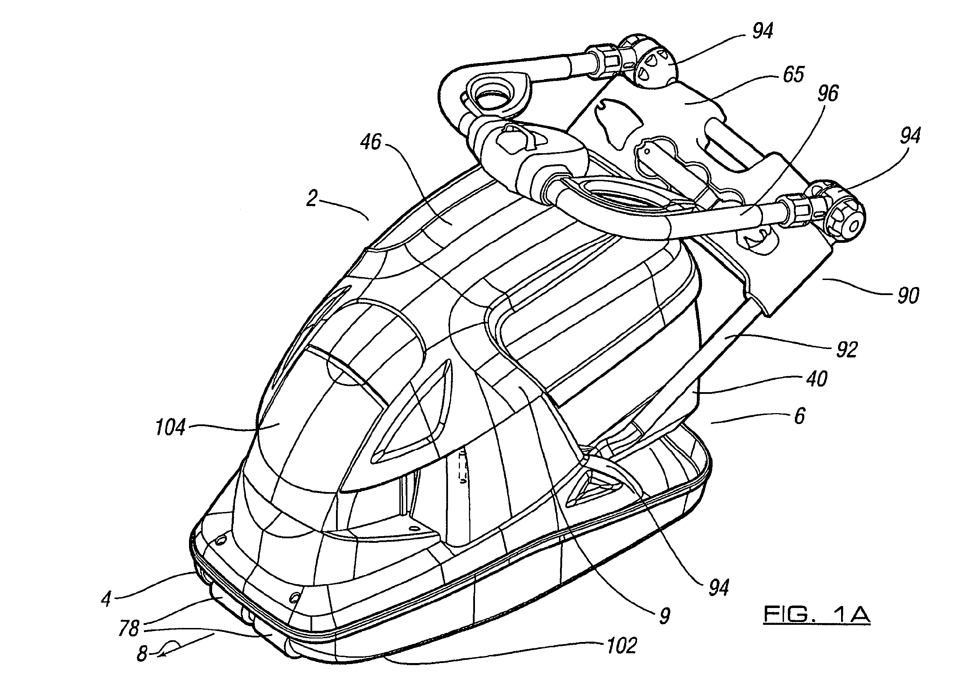

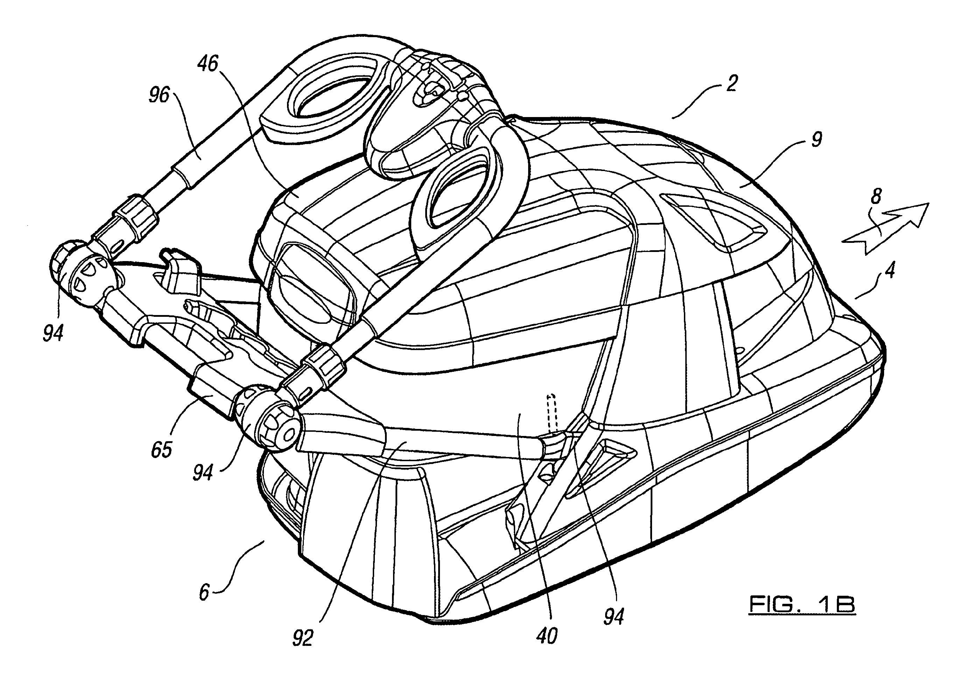

Referring firstly to Figures 1a and b, there is illustrated a mower 2 in accordance with one embodiment of the current invention. The mower typically includes a front 4, a rear 6 with the mower designed to move in the direction indicated by arrow 8.

The mower includes a housing 9 within which a grass collection box 40 is located and closed by a lid 46. Also provided is a handle assembly 90 which comprises two parts, a first part 92 with two spaced members connected for hingeable mounting on the housing and a second part 96 selectively connected to the first part 92 via engagement means 98, 100, the operation of which is described in more detail later. The first handle assembly part 92 also includes coiling and tool holding means 65.

The mower also includes front rollers 78 which depend downwardly from the bottom level 102 of the base of the mower such that the front rollers can make contact with undulating bumps, protrusions or indents in the surface being cut and thereby raise or lower the mower accordingly preventing the base surface 102 snagging on the said bumps or indentations as the mower moves.

Also provided within the housing, although not shown, and within a cowling 104 is the motor which is connected to power a rotating shaft and cutting blades as will be described in more detail later.

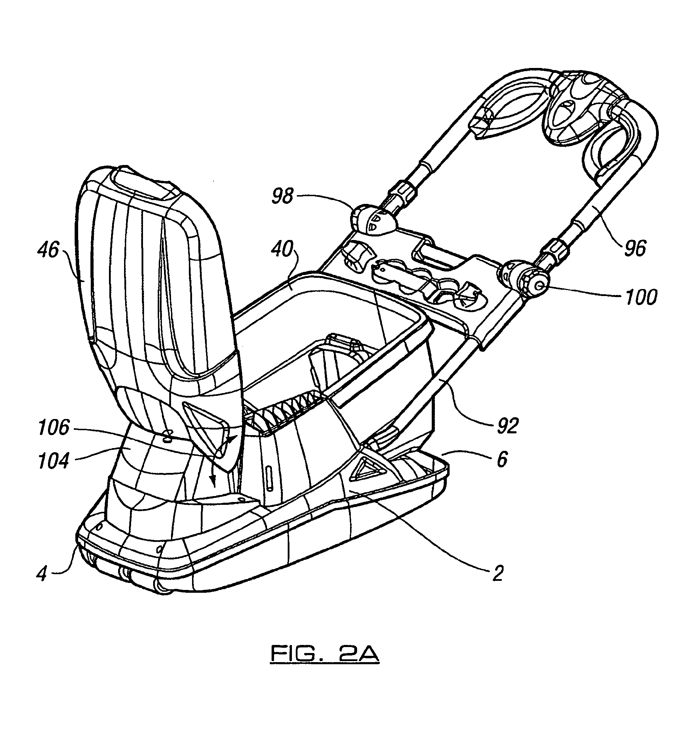

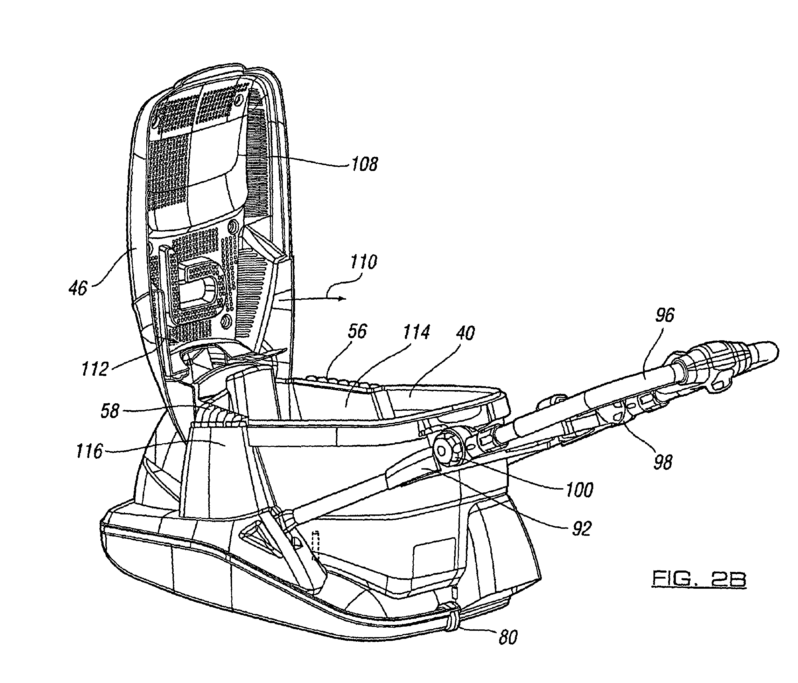

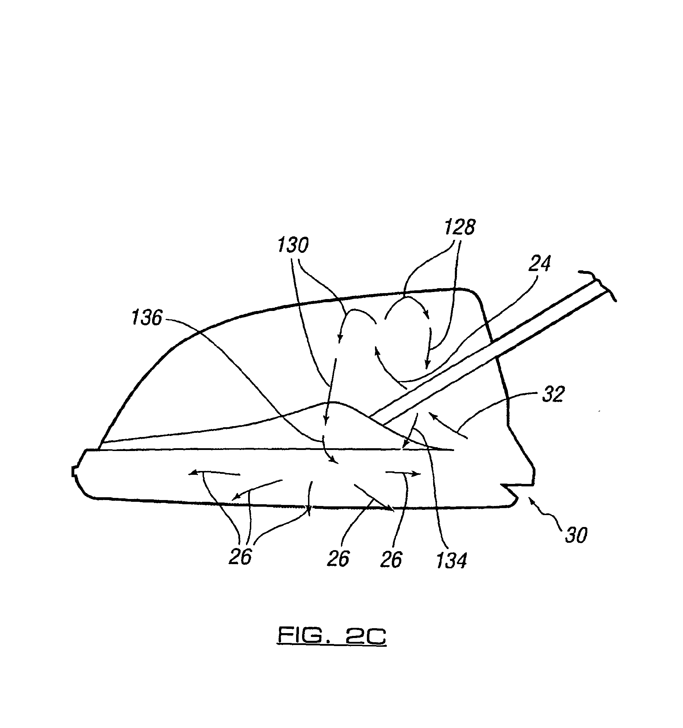

Referring now to Figures 2a and b, the mower is in this case in a different configuration, with the first and second handle parts 92 and 96 of the handle assembly shown in an in-use rather than storage position. The handle parts are in-line, having been rotated about the engagement means 94. Also shown, in this arrangement, is the lid 46 in an open position thereby exposing the opening into the grass collection box 40. It is through this opening that air leaves the grass collection box. It will be seen how the lid 46 opens towards the front 4 of the mower moving about pivot hinge connections as indicated by arrow 106 on the cowling 104 of the mower. By opening the lid in this manner, so the lid does not snag with the handle assembly 90 and therefore can be opened as far as required. Furthermore, as the cowling tends to be made of a stronger material than the remainder of the mower, so the location of the pivot hinges 106 is strong, and are less liable to breakage, especially when one considers that the lid may be opened relatively frequently and in a rough manner by the user.

The internal surface of the lid 46 is provided with a filter screen 108 which is designed to allow the passage of air through the same and into a cavity defined between the filter and the inner surface of the lid with the air, having had the grass cuttings caught by the filter screen and retained in the grass collection box 40, passing out of two channels as indicated by arrows 110 and 112 to enter into channels 114 and 116 respectively when the lid is in the closed position.

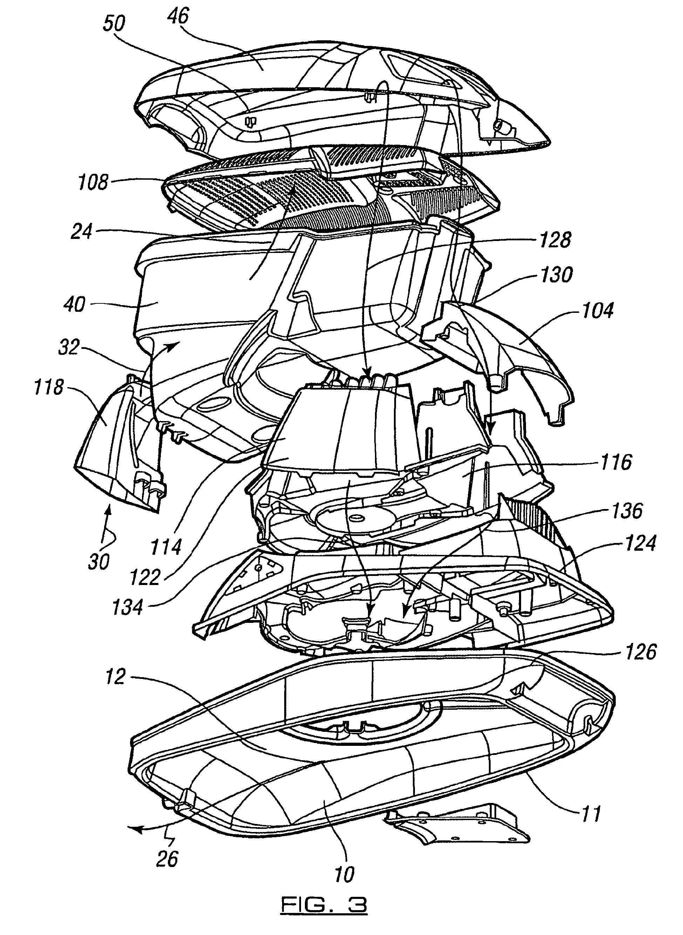

Turning now to Figure 3, the main moulding components of the mower housing are shown and these comprise, the lid 46, filter screen 108, collections box for grass 40, grass collection chute 118, cowling 104, a first baffle assembly 122, a second baffle assembly 124 and a base 126.

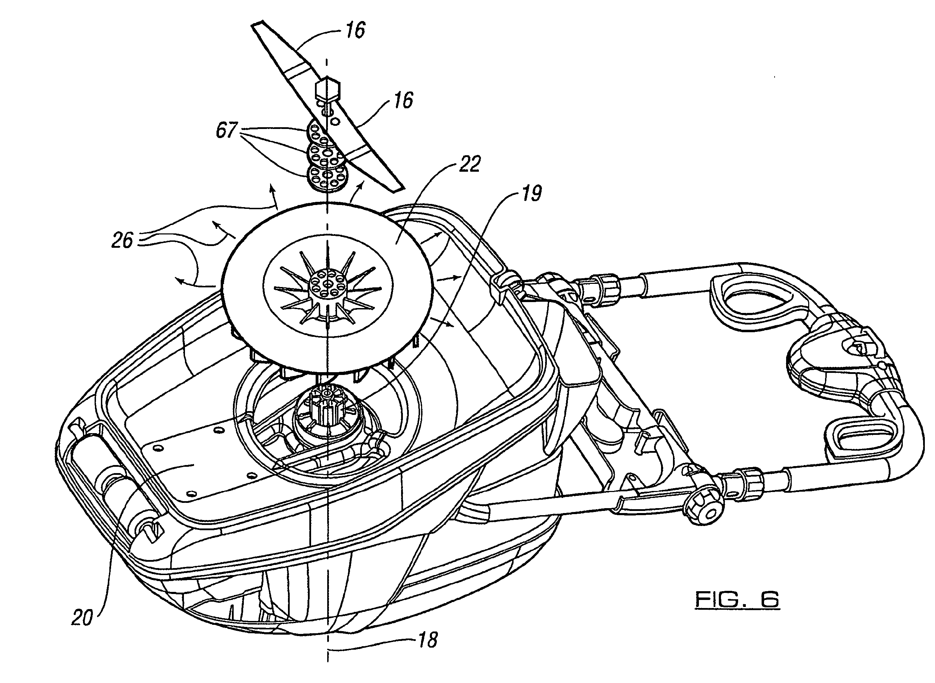

The base typically includes a cavity 10 defined between the grass contact surface 11 and an interior face 12 of the base. Positioned within the cavity are provided a series of cutter blades 16 as shown in Figure 6 which may be joined together as a single unit and mounted on a drive shaft 19 along a vertical axis 18. The drive shaft is driven by a motor 20 by conventional means. In order to provide the "hovering" effect of the mower, an impeller unit 22 is also provided to rotate about the vertical axis 18. The impeller causes the drawing in of air as will be described, from the housing to the centre of the impeller and throws the air out of the sides of the impeller as indicated by arrows 26 and which in turn causes the housing to raise above the surface of the soil and hence allow the mower to effectively hover and be more easily moved about the grass surface without the aid of wheels or the like.

In addition to providing the hover effect, the airflow generated is also used to allow the collection of grass cuttings by generating an air flow circuit as indicated by the arrows 30, 32, 24, 128, 130, 134, 136, 26 which show the flow of air through the components as show in schematic fashion in Figure 2 and also illustrated in Figure 3 with the air, as indicated by arrows 26 causing the hover effect of the base with respect to the grass.

The air flow circuit also causes the grass cuttings which are created by the cutting blade to be collected via the air flow 30 and moved into the grass cuttings collection box 40 through the chute 118. The cuttings box has an open top 44 but the housing is provided with the lid 46. The lid is provided with the filter screen 108 which allows the air to pass therethrough as indicated by arrows 32 in Figure 2c and Figure 3 but prevents the grass cuttings from passing therethrough so that the grass cuttings simply fall down into the collection box. This filter means provides a dual filtration as the air is required to pass through the same from the collections box into the cavity 50 of the lid and then into one of the two air channels 114, 116 as indicated by arrows 128, 130 in Figure 3. The air channels can be provided with guards 56, 58 as shown in Figure 2a to prevent access by a person's anatomy when the lid is open.

Typically, the channels 114, 116 are formed so as to encourage air flow downwardly as indicated by arrows 128, 130 and also inwardly towards the centre of the impeller 11 by the shaping of the first and second baffles 122, 124 which form an air passage which directs air flow as indicated by arrows 134, 136 which leads the air to the impeller in a smooth and efficient manner while minimising turbulence.

By providing this arrangement of air flow and collection of grass cuttings, so considerable advantage is achieved over the prior art. Firstly, the efficiency and usage of the air flow is increased by the shaping of the channels to introduce the air to the impeller at an optimum location and direction of movement, secondly, as the air flow when it enters the grass collection box continues upwardly in the same direction and does not have to pass through settled cuttings in the box so the amount of air which can flow through the grass collection box is improved and thirdly, the provision of the channels to receive the air which is first required to pass through a filter medium reduces the opportunity of the channels being blocked by grass cuttings or other debris.

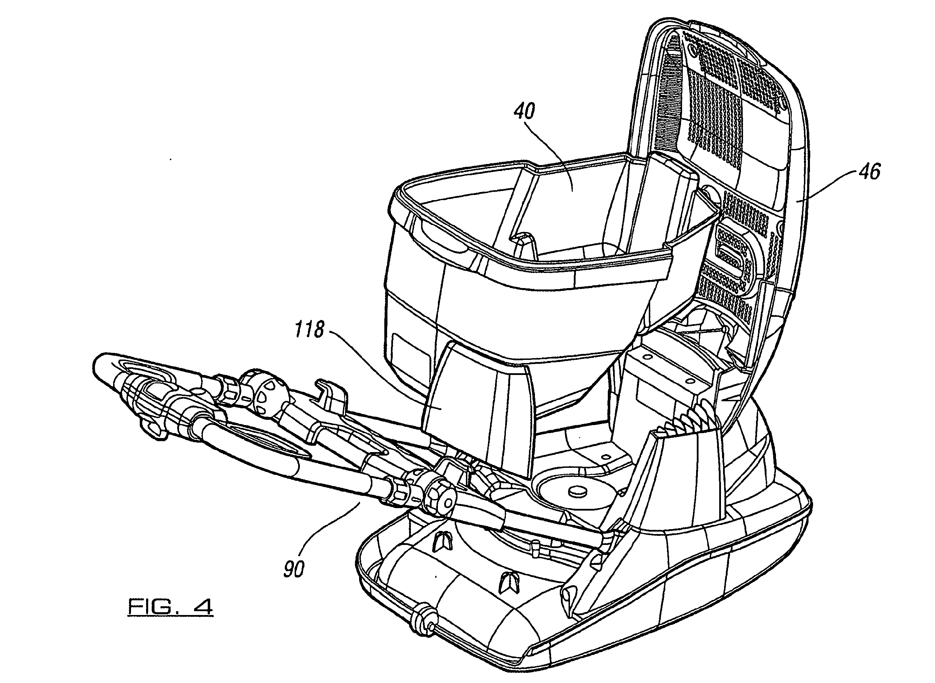

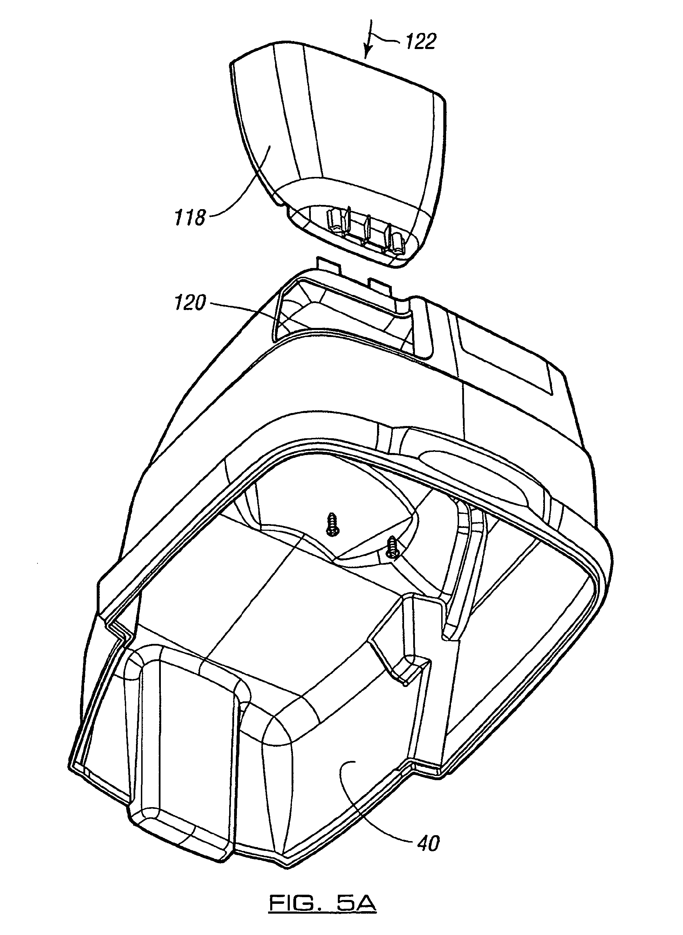

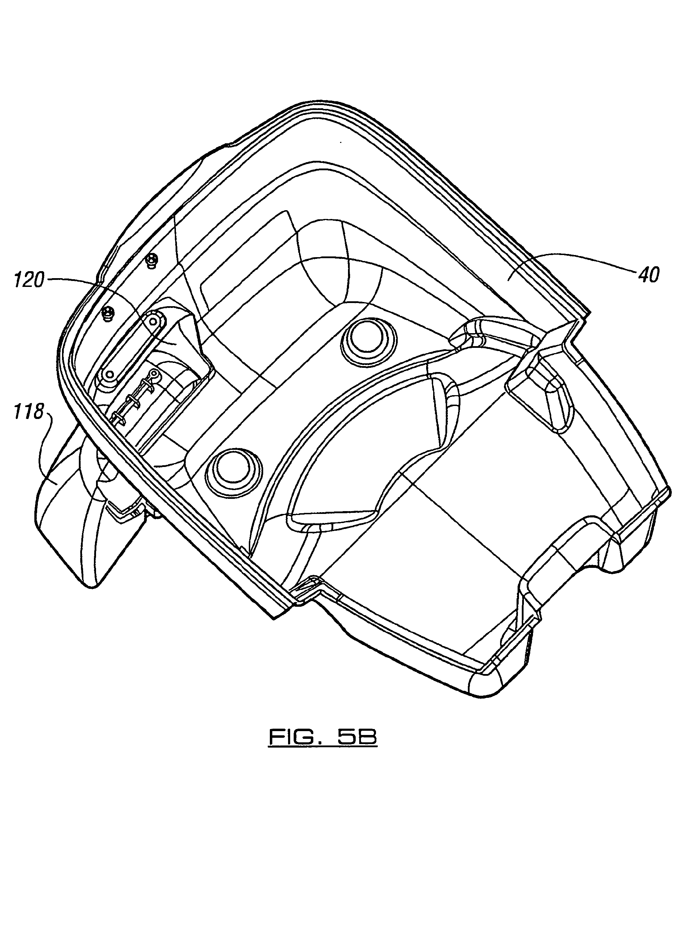

Figures 4, 5a and b illustrate the grass collection box 40 in more detail and illustrate how the collection box is firstly shaped so as to allow as many grass cuttings as possible to be accommodated therein prior to removal of the box for emptying while ensuring improved airflow, secondly, to be ergonomically pleasing and thirdly to allow integration of a separate grass cuttings collection chute 118 which locates with the inlet 120 in the collection box 40. The provision of the separate chute has two advantages. Firstly, it allows the chute to be formed and shaped internally so that the maximum flow of air and grass can be achieved through the inlet 122 to the chute, through the chute and hence into the inlet of the grass collection box 120. Secondly, the grass collection box itself can be formed of a transparent or at least sufficiently transparent material so as to allow a user, upon viewing the collection box externally, to identify a difference in shade or colour which is indicative of the level of grass cuttings within the box. The chute itself need not be made of the transparent material and therefore the provision of the same as a separate component allows a more suitable material to be used for the chute and collection box respectively to achieve the desired aims.

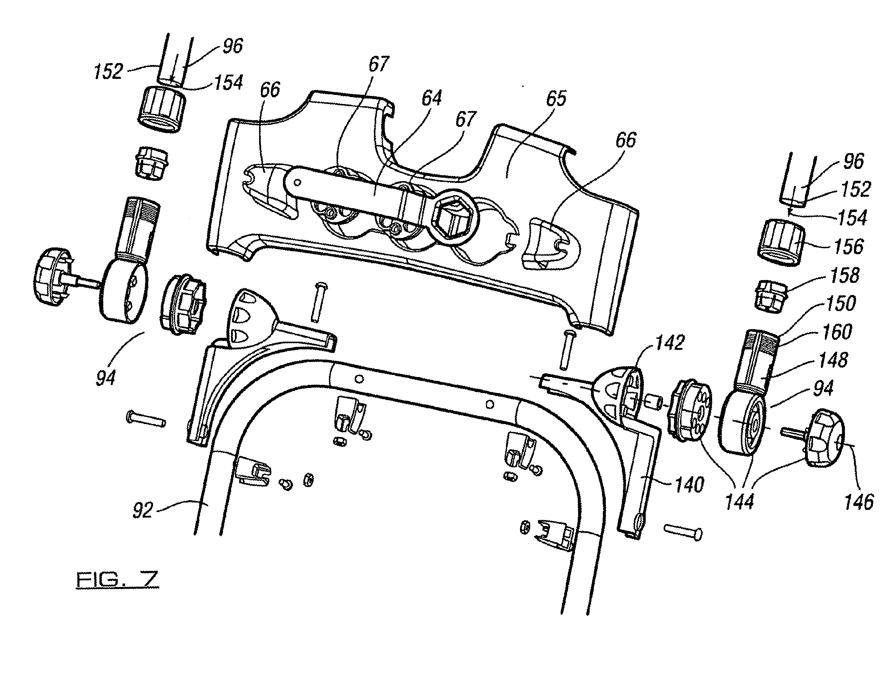

The handle assembly is typically manufactured from aluminium and/or plastic materials, and includes a tool storage device 65 as shown in detail in Figure 7 for tools 64 which typically are provided with the mower for changing of the blade, spacer elements 67 and also coiling means 66 to allow the electricity supply power cable to be coiled and stored on the handle.

Figure 7 also shows the components of the engagement means which allow the first part 92 of the handle assembly to be located with the second part 96 of the assembly. Engagement means 94 are provided at each side of the first part of the handle assembly 92. Each engagement means comprises a mounting 140 which includes a housing 142 for the reception of a ratchet assembly 144. This ratchet assembly, when the first and second parts of the handle assembly are connected, allows the second parts 96 of the handle assembly to be pivotally moved about the axis 146 between the storage position as shown in Figures 1a and b and in an in use position as shown in Figures 2a and b.

In addition, one component 148 of the ratchet assembly includes a collet 150 for the reception of the end 152 of a second handle part as indicated by arrow 154 in each case. The end 152 passes through an actuating ring 156 and an engaging ring 158 prior to passing into the collet 150. The engaging ring 158 also passes into the collet 150 with the actuating ring 156 threadably engaged on the threaded section 160 of the collet 150. With the end 152 in position in the collet 150, so the actuating ring 156 can be rotated to clamp the engagement ring 158 onto the end 152 of the handle assembly and hence clamp the same in position. Thus, engagement between the first and second parts of the handle assembly is achieved without the need to provide apertures through the members of the handle assembly thereby avoiding the possibility of weakening of the handle assembly. Rotation of the handle parts between storage and in-use positions can then occur via the operation of the ratchet assembly.

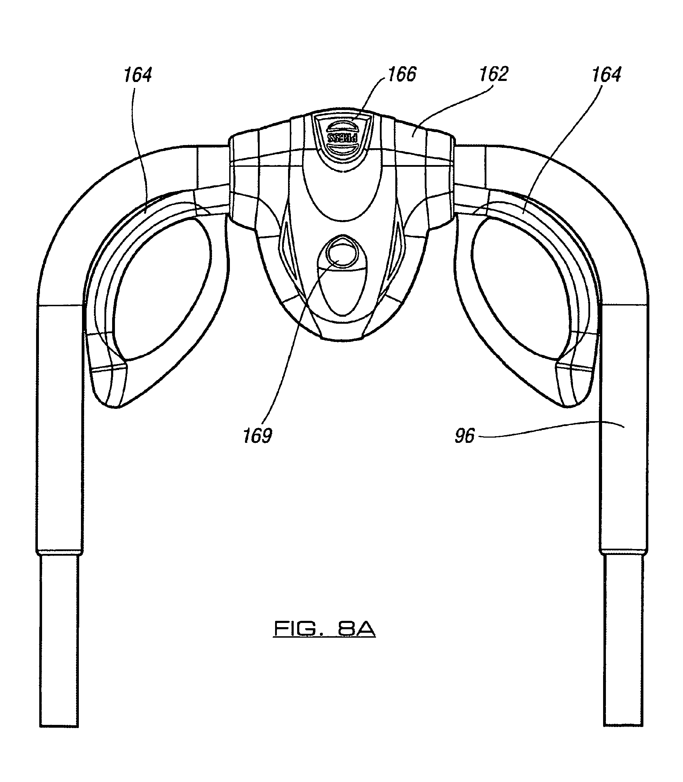

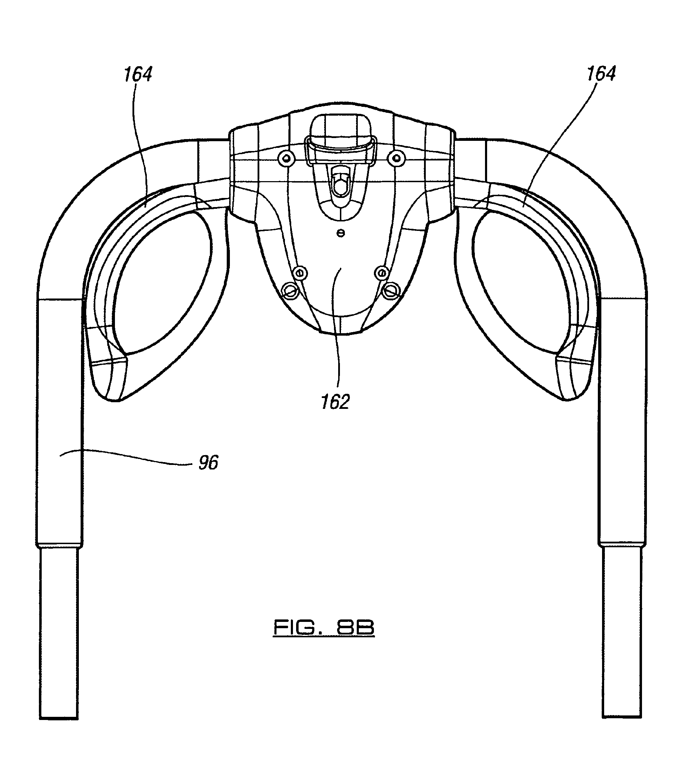

Turning now to Figures 8a and b, there is illustrated in detail a switch box assembly. The switchbox is mounted on the second part 96 of the handle assembly. The switch box 162 is provided with a power supply cable connected thereto, not shown, which in turn is connected to a switch contact within the switch box. The switch box is also provided in connection with hand levers 164 which are the second actuating means and a button for depression 166 which is a first actuating means for use by the user of the mower. In order to indicate when the power supply to the switchbox is on an illumination means 169 is provided which can be any suitable light source such as an LED.

Turning again-to the housing 2 of the mower, this includes the front toller 78 located as illustrated in Figure 1a and b such that the roller passes over the grass prior to the cutter reaching the same and allows the provision of stripes on the cut grass. A transport wheel 80 is also provided at the rear of the housing as indicated at Figure 2b. In this embodiment, the transport wheel is angled such that the same does not normally contact or makes minimal contact with the grass during the mowing operation. However, to transport the mower the housing can be tilted to cause the wheel to move in the direction indicated by the arrow towards the surface and hence allow the mower to be moved across the surface with the transport wheel in contact. The rear roller also acts as a support for the mower when the air hover feature may be lost due to, for example, the mower going over the edge of the grass. Thus the rear roller acts to support the base of the mower and maintain the height of the same to prevent the blades from cutting into the turf at too short a height.

Finally, turning to Figure 6 once more, a series of spacers 67 can be provided at the location indicated. One, none or a number of the spacers 67 can be located selectively with respect to the blades 16 by the user to allow the relative height of the blade to be adjusted with respect to the housing and hence with respect to the grass. This therefore allows the height of cut of grass to be adjusted by the selective location of the spacers.

## Claims

1. A grass mower (2), said grass mower (2) incorporating a housing (9), said housing (9) connected to a handle assembly (90) which allows the mower to be moved across the grass to be cut by a user, said housing (9) incorporating a motor for driving a shaft (19) and on which shaft, a series of cutting blades (16) are attached, and an impeller (22), said cutting blades (16) rotated to cut the grass and, an air flow passage or passages are defined within the housing (9) to allow the flow of air to the vicinity of the impeller (22) and grass cutting blades (16), to encourage the mower to hover, said mower (2) also incorporating a detachable grass cuttings collection box (40) through which the air passes prior to entering the housing carrying grass cuttings with the same into the collection box (40), said collection box (40) having an opening (44) which leads to at least two channels (114, 116) defined in the housing (9) through which air passes upon leaving the grass cuttings collection box (40), **characterised in that** the at least two spaced channels (114, 116) are provided, one on each opposing side of the collection box (40), and through both of which air passes when it leaves the grass collection box (40).

2. A mower according to claim 1 wherein each of the channels (114, 116) is provided at or adjacent a longitudinal edge of the housing to guide the air passing therethrough to flow towards the vertical shaft of the cutter blades (16).

3. A mower according to claim 1 wherein the channels (114, 116) direct the air into an air flow passage which includes at least one baffle (122, 124) therein, said baffle acting to direct the air in a low turbulence manner to the impeller (22).

4. A mower according to claim 3 wherein first and second baffles (122, 124) are provided to form the air passage of the desired shape to allow the low turbulence air flow to the impeller (22).

5. A mower according to claim 3 wherein the first and second baffle (122, 124) form an air passage intermediate the channels (114, 116) from the grass collection box (40) and the impeller (22).

6. A mower according to claim 1 wherein the channels (114, 116) through which the air passes, are of the same dimension so as to accommodate equal air flow in each channel.

7. A mower according to claim 1 wherein the channels (114, 116) are located and shaped with respect to the cutter blades (16) such that at least the entry into each channel, is offset from the location of the blades (16) and therefore the blades cannot be reached, or easily reached, from the channel entry.

8. A mower according to claim 1 wherein the opening (44) of the collection box (40) is positioned above the inlet (120) into the box (40) when the box is in position on the mower (2).

9. A mower according to claim 8 wherein the opening (44) is at the top of the collection box (40).

10. A mower according to claim 1 wherein part of the grass cuttings collection box (40) is positioned between the location of the air flow channels (114, 116).

11. A mower according to claim 1 wherein the collection box (40) includes an inlet aperture (120) through which the grass cuttings enter the collection box and an inlet chute (118) is provided to lead into the inlet aperture (120).

12. A mower according to claim 1 wherein a lid (46) is provided to close the opening (44) of the grass cuttings collection box (40).

13. A mower according to claim 12 wherein the internal face of the lid (46) is provided with a filtering means (108) so as to prevent grass cuttings passing through the same but to allow the air to exit the grass cuttings collection box (40) and pass to the channels (114, 116) in the housing.

14. A mower according to claim 12 wherein the lid (46) is hinged to the housing (9) with the location of the hinge being provided towards the front (4) of said housing allowing the lid (46) to pivot open towards the front of the housing.

15. A mower according to claim 1 wherein the grass cuttings collection box (40) includes an indication means which allows the user to be aware of when the collection box is full.

16. A mower according to claim 1 wherein at least one roller (78) is provided at the front (4) of the housing (9) and said roller is provided to protrude below the lower lip of the housing.

17. A mower according to claim 1 wherein the position of the mounting of the cutting blades (16) can be selectively spaced with respect to the housing by the provision of a series of spacer elements (67), said spacer elements selectively positionable on the drive shaft (19) for the cutter blades and on the portion of the drive shaft which lies between the interior surface of the housing (9) and the cutter blades (16).

18. A mower according to claim 1 wherein a transport wheel (80) is provided to allow the mower (2) to be moved between the storage and cutting locations or two different cutting locations at the rear (6) of the housing (9)of the mower.

19. A mower according to claim 18 wherein the wheel (80) is positioned such that in normal use of the mower (2) the transport wheel does not contact the surface and tilting of the mower housing (9) is required before the transport wheel (80) contacts the surface.

20. A mower according to claim 1 wherein the mower includes an indicator to indicate when the power supply to the switch box is on.

21. A mower according to claim 1 wherein the handle assembly (90) includes two assemblies (92, 96), a first part depending from the mower body and a second part provided for sliding engagement with the first part via engaging means which include a collet assembly (150) whereby tightening of the collet secures the end of the first or second part with the other part and, causes a gripping action on the other of said parts to provide engagement.

22. A mower according to claim 1 wherein the mower includes a tool tidy (65) and cable coiling formation (66) which allows tools conventionally provided with the mower to be stored with the mower during use, and also allows the cable to be coiled and stored in a coiled condition and retained in that position during storage.

## Patentansprüche

1. Ein Rasenmäher (2), wobei besagter Rasenmäher ein Gehäuse (9) aufweist, besagtes Gehäuse (9) an eine Griffeinheit (90) angeschlossen ist, die ermöglich, dass der Rasenmäher auf dem zu mähenden Grass bewegt werden und vom Anwender benutzt werden kann, besagtes Gehäuse (9) einen Motor zum Antrieb einer Welle (19) aufweist und auf dieser Welle eine Anzahl von Messern (16) befestigt ist, und ein Flügelrad (22), wobei die besagten Messer (16) zum Mähen des Grases gedreht werden und ein Lufteinlass oder Lufteinlässe in dem Gehäuse (9) definiert sind, damit der Luftstrom in die Nähe des Flügelrads (22) und der Messer (16) strömen kann, so dass der Rasenmäher gleiten kann, besagter Rasenmäher (2) ebenfalls einen abnehmbaren Grasfangkorb (40) enthält, durch den die Luft strömt, bevor sie in das Gehäuse eintritt, welches Gras mit derselben in den Grasfangkorb (40) bläst, besagter Grasfangkorb (40) eine Öffnung (44) aufweist, die zu wenigstens zwei in dem Gehäuse (9) definierten Kanälen (114,116) führt, durch welche Luft nach dem Austritt aus dem Grasfangkorb (40) strömt, **dadurch gekennzeichnet, dass** wenigstens zwei einer an jeder gegenüberliegenden Seite des Grasfangkorbs (40) in Abständen konstru-ierten Kanäle (114,116) bereitgestellt sind, und durch beide derselben Luft strömt, wenn sie aus dem Grasfangkorb (40) austritt.

2. Ein Rasenmäher nach Anspruch 1, in dem jeder der Kanäle (114,116) an oder neben einer Längskante des Gehäuses bereitgestellt wird, um die Luft, die hindurch strömt, zur senkrechten Welle der Messer (16) zu leiten.

3. Ein Rasenmäher nach Anspruch 1, in dem die Kanäle (114,116) die Luft in einen Lufteinlass leiten, der wenigstens ein Ablenkblech (122, 124) darin aufweist, und besagtes Ablenkblech wirkt, den Luftstrom mit niedriger Turbulenz zu dem Flügelrad (22) zu leiten.

4. Ein Rasenmäher nach Anspruch 3, in dem erste und zweite Ablenkbleche (122, 124) zur Bildung des Lufteinlasses der gewünschten Form bereitge-stellt werden, um den Luftstrom mit niedriger Turbulenz zu dem Flügelrad (22) strömen zu lassen.

5. Ein Rasenmäher nach Anspruch 3, in dem das erste und zweite Ablenk-blech (122, 124) einen Lufteinlass zwischen den Kanälen (114, 116) vom Grasfangkorb (40) und dem Flügelrad (22) bildet.

6. Ein Rasenmäher nach Anspruch 1, in dem die Kanäle (114,116), durch die die Luft strömt, die gleichen Abmessungen aufweisen, um einen gleichen Luftstrom in jedem Kanal zu ermöglichen.

7. Ein Rasenmäher nach Anspruch 1, in dem die Kanäle (114,116) in Bezug auf die Messer (16) derart positioniert und geformt sind, dass wenigsten der Eingang in jeden Kanal von der Position der Messer (16) versetzt ist und die Messer somit nicht berührt werden können oder nicht leicht vom Kanalein-gang berührt werden können.

8. Ein Rasenmäher nach Anspruch 1, in dem die Öffnung (44) des Grasfang-korbs (40) über dem Einlass (120) in den Grasfangkorb (4) positioniert ist, wenn der Grasfangkorb sich in Position auf dem Rasenmäher (2) befindet.

9. Ein Rasenmäher nach Anspruch 8, in dem die Öffnung (44) sich oben auf dem Grasfangkorb (49) befindet.

10. Ein Rasenmäher nach Anspruch 1, in dem ein Teil des Grasfangkorbs (40) zwischen den Luftstromkanälen (114,116) positioniert ist.

11. Ein Rasenmäher nach Anspruch 1, in dem der Grasfangkorb (40) eine Einlassöffnung (120) aufweist, durch die das gemähte Gras in den Gras-fangkorb (40) eintritt und ein zur Einlassöffnung (120) führender Einlass-schacht (118) bereitgestellt wird.

12. Ein Rasenmäher nach Anspruch 1, in dem ein Deckel (46) zum Schließen der Öffnung (44) des Grasfangkorbs (40) bereitgestellt ist.

13. Ein Rasenmäher nach Anspruch 12, in dem die Innenseite des Deckels (46) mit einem Filtermittel (108) ausgestattet ist, so dass das Gras nicht durch selbiges passieren, aber ermöglicht, dass Luft aus dem Grasfangkorb (40) und durch die Kanäle (114, 116) im Gehäuse austreten kann.

14. Ein Rasenmäher nach Anspruch 12, in dem der Deckel mit einem Scharnier am Gehäuse (9) befestigt ist, wobei sich die Position des Scharniers zur Vorder-seite (4) hin des besagten Gehäuses befindet, so dass der Deckel (46) sich zur Vorderseite des Gehäuses aufschwenken lässt.

15. Ein Rasenmäher nach Anspruch 1, in dem der Grasfangkorb (40) ein Anzeigemittel aufweist, das dem Anwender anzeigt, wenn der Grasfangkorb (40) voll ist.

16. Ein Rasenmäher nach Anspruch 1, in dem wenigstens eine Rolle (78) an der Vorderseite (4) des Gehäuses (9) bereitgestellt wird und besagte Rolle bereitgestellt wird, um unter dem unteren Rand des Gehäuses (9) hervor-zustehen.

17. Ein Rasenmäher nach Anspruch 1, in dem die Position der Befestigung der Messer (16) selektiv in Bezug auf das Gehäuse durch die Bereitstellung einer Reihe von Abstandhaltern (67) angeordnet werden kann, besagte Abstandhalter auf der Antriebswelle (19) für die Messer positioniert werden können und auf dem Teil der Antriebswelle, der zwischen der Innenseite des Gehäuses (9) und den Messern (16) liegt.

18. Ein Rasenmäher nach Anspruch 1, in dem ein Transportrad (80) an der Rückseite (6) des Gehäuses (9) bereitgestellt wird, so dass der Rasenmäher (2) vom Lagerort zu Stellen, wo gemäht werden soll oder zwischen zwei verschiedene Mähstellen bewegt werden kann.

19. Ein Rasenmäher nach Anspruch 18, in dem das Rad (80) so positioniert ist, dass bei normaler Anwendung des Rasenmähers (2) das Transportrad den Boden nicht berührt und ein Kippen des Gehäuses (9) notwendig ist, bevor des Transportrad (80) Kontakt mit dem Boden hat.

20. Ein Rasenmäher nach Anspruch 1, in dem der Rasenmäher eine Anzeige aufweist, die anzeigt wenn die Stromversorgung zum Schalter angeschaltet ist.

21. Ein Rasenmäher nach Anspruch 1, in dem die Griffeinheit (90) zwei Ein-heiten (92, 96) aufweist, wobei sich ein erster Teil vom Rasenmäherkörper erstreckt und ein zweiter Teil zu einem gleitenden Eingriff mit dem ersten Teil über Eingriffsmittel bereitgestellt ist, die einen Hülsensatz (150) auf-weisen, wobei das Anziehen der Hülse das Ende des ersten oder zweiten Teils mit dem anderen Teil durch einen Klemmvorgang auf die anderen besagten Teile sichert, um einen Eingriff zu ermöglichen.

22. Ein Rasenmäher nach Anspruch 1, in dem der Rasenmäher ein Fach (65) für das Zubehör und eine Kabelaufwicklung (66) aufweist, die ermöglicht, dass das normalerweise mitgelieferte Zubehör im Rasenmäher während der Anwendung aufgehoben werden kann und das Kabel auch aufgewickelt werden kann und in einem aufgewickeltem Zustand belassen werden und in dieser Position gelagert werden kann.

## Revendications

1. Tondeuse à gazon (2), ladite tondeuse à gazon (2) comprenant un carter (9), ledit carter (9) étant raccordé à un ensemble formant mancheron (90), qui permet de faire évoluer la tondeuse à gazon au-dessus du gazon que doit couper un utilisateur, ledit carter (9) incorporant un moteur qui mène un arbre (19) sur lequel sont attachées une série de lames de coupe (16), et un rotor (22), lesdites lames de coupe (16) pivotant pour couper le gazon, et une voie de circulation d'air (ou davantage) est prévue à l'intérieur du carter (9) pour permettre à l'air de circuler au voisinage du rotor (22) et des lames de coupe (16) pour encourager la tondeuse à planer, ladite tondeuse (2) incorporant de plus un bac de ramassage d'herbes (40) détachable à travers lequel passe l'air avant de pénétrer dans le carter, cet air entraînant les herbes coupées jusque dans le bac de ramassage d'herbes (40), ledit bac de ramassage (40) ayant une ouverture (44) qui aboutit à au moins deux canaux (114, 116) définis dans le carter (9) et dans lesquels passe l'air à sa sortie du bac de ramassage d'herbes coupées (40), **caractérisée en ce que** sont prévus au moins deux canaux (114, 116) espacés l'un de l'autre, dont un sur chaque côté opposé du bac de ramassage d'herbes (40), l'air passant dans ces deux canaux quand il sort du bac de ramassage d'herbes (40).

2. Tondeuse selon la revendication 1, dans laquelle chacun des canaux (114, 116) est prévu au niveau d'un bord longitudinal du carter ou adjacent à celui-ci pour guider l'air qui passe dans ces canaux vers l'arbre vertical des lames de coupe (16).

3. Tondeuse selon la revendication 1, dans laquelle les canaux (114, 116) dirigent l'air jusque dans une voie de circulation d'air dont l'intérieur comprend au moins une cloison (122, 124), ladite cloison servant à diriger l'air avec un minimum de turbulence jusqu'au rotor (22).

4. Tondeuse selon la revendication 3, dans laquelle les première et seconde cloisons (122, 124) sont prévues de sorte à former un débit d'air de la forme souhaitée pour produire une circulation d'air à faible turbulence vers le rotor (22).

5. Tondeuse selon la revendication 3, dans laquelle les première et seconde cloisons (122, 124) forment une voie d'air entre les canaux (114, 116) depuis le bac de ramassage d'herbes (40) jusqu'au rotor (22).

6. Tondeuse selon la revendication 1, dans laquelle les canaux (114, 116) dans lesquels passe l'air sont de taille identique, de sorte que le débit d'air est le même dans les deux canaux.

7. Tondeuse selon la revendication 1, dans laquelle les canaux (114, 116) sont placés et conformés relativement aux lames de coupe (16) de sorte qu'au moins l'entrée de chaque canal est décalée par rapport à la position des lames (16); il est donc impossible ou pratiquement impossible d'atteindre les lames à partir de l'entrée des canaux.

8. Tondeuse selon la revendication 1, dans laquelle l'ouverture (44) du bac de ramassage d'herbes (40) se trouve au-dessus de l'entrée (120) lorsque le bac de ramassage d'herbes (40) est en place sur la tondeuse (2).

9. Tondeuse selon la revendication 8, dans laquelle l'ouverture (44) est au sommet du bac de ramassage (40).

10. Tondeuse selon la revendication 1, dans laquelle une partie du bac de ramassage d'herbes coupées (40) se trouve entre les positions des canaux de circulation d'air (114, 116).

11. Tondeuse selon la revendication 1, dans laquelle le bac de ramassage (40) comprend une ouverture d'entrée (120) à travers laquelle les herbes coupées pénètrent dans le bac de ramassage, et une goulotte d'entrée (118) est agencée pour aboutir dans l'ouverture d'entrée (120).

12. Tondeuse selon la revendication 1, dans laquelle un couvercle (46) est prévu pour fermer l'ouverture (44) du bac de ramassage d'herbes (40).

13. Tondeuse selon la revendication 12, dans laquelle la face intérieure du couvercle (6) est pourvue de moyens formant filtre (108) qui empêchent les herbes coupées de passer à travers, tout en laissant l'air sortir du bac de ramasssage (40) et passer dans les canaux (114, 116) prévus dans le carter (9).

14. Tondeuse selon la revendication 12, dans laquelle le couvercle (46) est articulé sur le carter (9), le moyen d'articulation étant placé vers le devant (4) dudit carter, ce qui permet de faire pivoter le couvercle (46) pour qu'il s'ouvre vers le devant du carter.

15. Tondeuse selon la revendication 1, dans laquelle le bac de ramassage d'herbes coupées (40) comprend un indicateur qui permet à l'utilisateur de savoir quand le bac est plein.

16. Tondeuse selon la revendication 1, dans laquelle au moins un rouleau (78) est prévu sur le devant (4) du carter (9), et ledit rouleau est agencé pour faire saillie au-dessous de la lèvre inférieure du carter.

17. Tondeuse selon la revendication 1, dans laquelle la position de montage des lames de coupe (16) peut être espacée relativement au carter par la mise en place d'une série de pièces d'écartement (67), lesdites pièces d'écartement pouvant être positionnées sélectivement sur l'arbre de commande (19) pour les lames de coupe et sur la partie de l'arbre de commande située entre la surface intérieure du carter (9) et les lames de coupe (16).

18. Tondeuse selon la revendication 1, dans laquelle est prévue, à l'arrière (6) du carter (9) de la tondeuse, une roue de transport (80) qui permet de déplacer la tondeuse entre les lieux de rangement et de coupe, ou entre deux lieux de coupe différents.

19. Tondeuse selon la revendication 18, dans laquelle la roue (80) est placée de sorte que, pendant l'emploi normal de la tondeuse (2), la roue de transport n'est pas en contact avec la surface et il faut incliner le carter (9) de la tondeuse pour que la roue de transport (80) entre en contact avec la surface.

20. Tondeuse selon la revendication 1, dans laquelle la tondeuse comprend un témoin qui est allumé lorsque la boîte de commutation est sous tension.

21. Tondeuse selon la revendication 1, dans laquelle l'ensemble formant mancheron (90) comprend deux sous-ensembles (92, 96), dont un premier est assujetti au corps de la tondeuse tandis que le second est prévu pour s'adapter en coulissant avec le premier, par le biais d'un ensemble à douille de serrage (150), de sorte que le serrage de la douille attache l'extrémité du premier ou du second sous-ensemble avec l'autre sous-ensemble et fait exercer une action de serrage sur l'autre desdits sous-ensembles pour assurer l'engagement.

22. Tondeuse selon la revendication 1, dans laquelle la tondeuse comprend un espace de rangement d'outils (65) et une formation d'enroulement du câble (66) qui permet de ranger les outils généralement fournis avec la tondeuse pendant son emploi, et permet par ailleurs d'enrouler le câble et de le conserver à l'état enroulé lorsque la tondeuse n'est pas utilisée.
